# EUROPÄISCHE PATENTSCHRIFT

(11) **EP 3 378 296 B1**
(45) Veröffentlichungstag und Bekanntmachung des Hinweises auf die Patenterteilung: **26.02.2020**
(21) Anmeldenummer: 18401023.9
(22) Anmeldetag: 09.03.2018
(51) Int. Cl.: A01B 69/00, A01D 41/127, G06F 3/01, G06F 3/0484

(54) **LANDWIRTSCHAFTLICHES TERMINAL**
AGRICULTURAL TERMINAL
TERMINAL AGRICOLE

(30) Priorität: 15.03.2017 DE 102017105487
(43) Veröffentlichungstag der Anmeldung: 26.09.2018
(73) Patentinhaber: Amazonen-Werke H. Dreyer GmbH & Co. KG, 49205 Hasbergen (DE)
(72) Erfinder: Sia, Tim-Randy, 49179 Ostercappeln (DE); Kühn, Christoph, 49080 Osnabrück (DE); Konermann, Thomas, 49479 Ibbenbüren (DE); Käller, Michael, 49324 Melle (DE)

(56) Entgegenhaltungen:
- EP-A2- 2 687 923
- DE-A1-102004 045 885
- DE-B3-102013 019 098
- JP-A- 2013 118 856

## Beschreibung

Die Erfindung betrifft ein landwirtschaftliches Terminal gemäß dem Oberbegriff des Patentanspruches 1.

Ein derartiges landwirtschaftliches Terminal, umfassend einen berührungsempfindlichen Bildschirm zur Eingabe von Parameterwerten zur Einstellung von Einstellparametern ist allgemein bekannt und beispielsweise durch die EP2687923A2 offenbart.

Die DE 10 2004 045 885 A1 befasst sich mit Bedienelementen von Kraftfahrzeugen und stellt eine Orientierungshilfe bereit, diese einfach zu erkennen und zu bedienen. Annäherungssensoren werden in der JP 2013 118 856 A und der DE 10 2013 019 098 B3 genannt.

Nachteilig an bekannten Terminals zur Überwachung des Arbeitsprozesses und zur Einstellung von Arbeitsparametern der landtechnischen Maschine ist im Allgemeinen, dass die Ausnutzung des darstellbaren Bildschirmbereiches nicht optimal und effizient ist. Insbesondere bei der Steuerung von landtechnischen Maschinen ist es notwendig, eine Vielzahl von Informationen über Arbeitsparameter, wie Ausbringmenge und aktivierte Teilbreiten, Informationen über den Status der Maschine, wie Position der Maschine, Geschwindigkeit, Restmenge eines auszubringenden Guts in einem Behälter, und weitere Informationen, wie Temperatur und Witterungsbedingungen darzustellen. Andererseits müssen während der Feldarbeit verschiedenste Einstellungen an der Maschine gesteuert werden, hierzu gehört beispielsweise die Steuerung von einzelnen einer große Anzahl von Teilbreiten, die Veränderung der Ausbringmenge bei einer Verteilmaschine, die gezielte Steuerung von Zusatzeinrichtungen, wie Grenzstreuschirmen, die Anpassung der Lage der jeweiligen landtechnischen Maschine, wie Höhe, Arbeitstiefe etc.. Insbesondere bei bekannten Terminals mit berührungsempfindlichen Bildschirmen, ergeben sich oft Nachteile, weil die Darstellung der relevanten Informationen und die Darstellung der Bedienflächen zur Einstellung der landtechnischen Maschine im selben Bereich dargestellt werden.

Aufgabe der vorliegenden Erfindung ist es ein landwirtschaftliches Terminal bereitzustellen, dass die Nachteile des Standes der Technik behebt und insbesondere eine bessere Ausnutzung des Bildschirmbereichs eines landwirtschaftlichen Terminals ermöglicht.

Diese Aufgabe wird durch den kennzeichnenden Teil des Anspruchs 1 gelöst. Es ist also vorgesehen, ein Terminal bereitzustellen, das über zumindest einen Näherungssensor zur Erfassung von sich nähernden Objekten verfügt und dass das Terminal bei sich nähernden Objekten, insbesondere einer Hand oder Fingern, Bedienelemente zur Einstellung von Einstellparametern, insbesondere einer Anpassung der Ausbringmenge oder einem Schalten von Teilbreiten, der landtechnischen Maschine einblendet oder vergrößert darstellt. Mittels der Integration eines zusätzlichen Sensors zur Detektion von sich nähernden Objekten, insbesondere einer Hand oder Fingern, lässt sich der Bildschirmbereich des Terminals besonders effizient ausnutzen. Es können nämlich die Bedienelemente ausgeblendet oder verkleinert werden, wenn sich keine Hand oder Finger in der Näher des berührungsempfindlichen Bildschirms befindet und daher keine Wunsch der Betätigung von Bedienelementen durch den Nutzer zu erwarten ist. Hierbei kann vorgesehen sein, die Bedienelemente verkleinert darzustellen oder komplett auszublenden. Der Vorteil, die Elemente verkleinert darzustellen ist einerseits, dass der Benutzer die Information optimiert dargestellt bekommt, welche Bedienelemente in der jeweiligen Bildschirmansicht zur Bedienung zur Verfügung stehen. Andererseits ermöglicht es ein vollständiges Ausblenden der Bedienelemente, andere Informationen in dem betreffenden Bildschirmbereich darzustellen. Es kann von der jeweiligen Vorliebe des Benutzers abhängig gemacht werden, ob die Bedienelemente vollständig ausgeblendet oder verkleinert dargestellt werden. Es kann auch von der jeweils aktivierten Ansicht abhängig gemacht werden, ob die Bedienelemente verkleinert dargestellt werden, oder vollständig ausgeblendet werden. So kann wahlweise vorgesehen sein in einer GPS-Ansicht, die typischerweise eine Kartenansicht der zu bearbeitenden Fläche und die derzeitige Position und ggf. den Arbeitsstatus der landtechnischen Maschine zeigt, die Bedienelemente komplett auszublenden, während in einer Maschinenansicht, welche den Status der Maschine darstellt, und insbesondere Informationen über die derzeitigen Arbeitsparameter zeigt, die Bedienelemente nur mit verringerter Größe dargestellt werden.

Der Vorteil der vorliegenden Erfindung ist einerseits, dass die zunehmend komplexen Arbeitsabläufe der landtechnischen Maschine durch die optimierte Darstellung besser überwacht werden können, da in dem Bildschirmbereich mehr Informationen dargestellt werden können. Andererseits können die Bedienelemente größer dargestellt werden, da sie nur eingeblendet oder vergrößert werden, wenn bei angenäherter Hand oder Fingern wirklich eine Bedienung erfolgen soll. Dies ist daher von Vorteil, da große Erschütterungen bei der Fahrt über die landwirtschaftliche Fläche die Bedienung der Bedienelemente oftmals erschweren, was zu einer unnötigen Inanspruchnahme der Aufmerksamkeit des Benutzers oder sogar zu Fehlbedienungen der Maschine führt. Ein Terminal entsprechend der vorliegenden Erfindung muss hier also keinen Kompromiss eingehen zwischen der Größe der Bedienelemente und dem Bereich des Bildschirms, in dem dem Benutzer Informationen dargestellt werden können. Ein weiterer Vorteil ergibt sich aus der Tatsache, dass auf Grund der zunehmenden Anzahl von physikalischen Steuer- und Bedienelementen, wie Schaltern und Hebeln in der Kabine einer landwirtschaftlichen Schleppers oder eines Selbstfahrers die Größe der verwendeten Terminals begrenzt ist und somit zunehmend der Bedarf besteht, die Größe des Bildschirms des verwendeten Terminals in optimaler Weise auszunutzen.

In einer vorteilhaften Weiterbildung der Erfindung wird der Betriebszustand der landtechnischen Maschine durch das Terminal und/oder einen Jobrechner an der landtechnischen Maschine erfasst und an das Terminal übermittelt und das Terminal stellt Bedienelemente in Abhängigkeit des derzeitigen Betriebszustandes, insbesondere Arbeitsfahrt oder Straßenfahrt, der landtechnischen Maschine dar. Hierdurch wird eine weiter verbesserte Ausnutzung des verfügbaren Darstellraumes des Bildschirms des Terminals erreicht, indem nur die Bedienelemente eingeblendet werden, die für den derzeitigen Betriebszustand der landtechnischen Maschine überhaupt relevant sind. So ist es beispielsweise unnötig während einer Straßenfahrt eine Teilbreitenschaltung für den Benutzer anzubieten, welche bei der Feldarbeit das An- und Abschalten einzelner Sektionen der Verteilung einer Verteilmaschine, wie Sämaschine, Feldspritze oder Düngerstreuer, ermöglicht. Die Information über den momentanen Betriebszustand kann insbesondere durch Sensoren an der landtechnischen Maschine oder dem Schlepper derselben bereitgestellt werden. So kann beispielsweise eine Position eines Aktors an der landtechnischen Maschine eine Inbetriebsstellung oder Außerbetriebsstellung anzeigen, beispielsweise ein Hydraulikzylinder zum Klappen und/oder Verriegeln eines Spritzgestänges, eines Bodenbearbeitungsmaschine, einer Sämaschine usw. Auch der Antrieb eines Motors, beispielsweise eines Gebläses, einer Pumpe, oder der Antrieb von Streuscheiben eines Düngerstreuers kann einen Betriebsmodus anzeigen. Alternativ oder zusätzlich kann die mittels eines GPS-Sensors an dem Schlepper oder der landtechnischen Maschine gemessene Position anzeigen, dass sich diese derzeit auf einem zu bearbeitenden Feld befindet, so dass als Betriebsmodus der Arbeitsbetrieb gewählt wird. Alternativ kann die momentane Geschwindigkeit der landtechnischen Maschine mittels des GPS-Systems oder sonstiger Sensoren erfasst werden und eine Schwelle festgelegt sein, welche einen Wechsel der Betriebsart von Arbeitsbetrieb in Straßenbetrieb oder umgekehrt ändert, beispielsweise bei einer Geschwindigkeit ab 25 km/h. Die Information über den derzeitigen Betriebsmodus kann durch das Terminal auch aus einer Kombination mehrerer der obigen und/oder weiterer Informationen abgeleitet werden. Die benötigten Informationen werden durch das Auslesen von Sensorinformationen durch das Terminal ermittelt oder durch mit dem Terminal verbundene Jobrechner oder weitere Terminals, Smartphones, Tablets oder ähnliches an der landtechnischen Maschine oder dem Schlepper bereitgestellt und übermittelt.

Zusätzlich oder alternativ kann vorgesehen sein, dass die Größe der Bedienelemente von weiteren Faktoren abhängt, beispielsweise von der momentanen Geschwindigkeit und/oder dem Betriebsmodus der landtechnischen Maschine. Im Arbeitsmodus auf dem Feld und bei entsprechend hoher Geschwindigkeit ist die Bedienung der Bedienelemente erschwert und zudem aufgrund der während der gleichen Zeitspanne zurückgelegten Wegstrecke zeitkritischer als bei einer vergleichsweise niedrigen Geschwindigkeit bei der Feldarbeit. Aus diesem Grund kann die Größe der Darstellung der Bedienelemente beispielsweise generell geschwindigkeitsabhängig und damit in Abhängigkeit von dem Betriebszustand Geschwindigkeit vorgesehen sein.

In einer vorteilhaften Weiterbildung der Erfindung wird ein Wegbewegen der Objekte durch das Terminal erfasst und blendet das Terminal nach einer in diesem hinterlegten Zeitspanne die Bedienelemente aus oder stellt diese verkleinert dar, sofern während der Zeitspanne nicht erneut sich nähernde Objekte durch den Näherungssensor erfasst werden. Auf diese Weise wird der durch die Bedienelemente belegte Darstellbereich nach einer in dem Terminal hinterlegten Zeitspannt wieder freigegeben. Insbesondere ist vorgesehen, dass die hinterlegte Zeitspanne durch den Benutzer in einem entsprechenden Menu des Terminals an die jeweiligen Vorlieben angepasst werden kann. Auf diese Weise wird die Bedieneffizienz des Terminals zusätzlich erhöht und das Auftreten von Fehlbedienungen zusätzlich minimiert.

In einer möglichen Ausgestaltung der Erfindung ist der Näherungssensor als kapazitiver und/oder optischer Sensor und/oder Time-of-Flight-Kamera und/oder Laserscanner ausgebildet. Insbesondere kann vorgesehen sein, bei einem Terminal, welches virtuelle Bedienelemente auf einem berührungsempfindlichen Bildschirm und zusätzlich physikalische Bedienelemente, beispielsweise als Tastenfeld neben dem Bildschirm, aufweist, zumindest zwei gleichartige Sensoren oder verschiedenartige Sensoren basierend auf verschiedenen Messprinzipien in dem Terminal anzuordnen. So kann es vorteilhaft sein, einen optischen Sensor zur Detektion von sich nähernden Händen und/oder Fingern im Bereich des Bildschirmes vorzusehen, welcher beispielsweise unterhalb des Bildschirmes angeordnet ist. Ein zweiter Sensor im Bereich der physikalischen Bedienelemente kann beispielsweise als kapazitiver Sensor ausgeführt sein, um sich nähernde Finger oder Hände in diesem Bereich zu detektieren. Dieser zweite Sensor ist insbesondere dann vorteilhaft, wenn der Winkelbereich des Messfeldes des ersten Sensors zu klein ist, um sich nähernde Finger oder Hände im Bereich des Tastenfeldes zuverlässig mit zu erfassen. Sind mehrere Tastenfelder mit physikalischen Tasten vorgesehen, so kann auch ein Sensor pro Tastenfeld zusätzlich zu dem Sensor im Bereich des Bildschirmes vorgesehen sein.

Weitere Einzelheiten der Erfindung sind der Beispielsbeschreibung zu entnehmen. Die Zeichnungen zeigen
- Fig. 1: ein erfindungsgemäßes Terminal an einem landwirtschaftlichen Maschinensystem,
- Fig. 2: ein erfindungsgemäßes Terminal mit eingeblendeten Bedienelementen und
- Fig. 3: ein erfindungsgemäßes Terminal mit ausgeblendeten Bedienelementen.

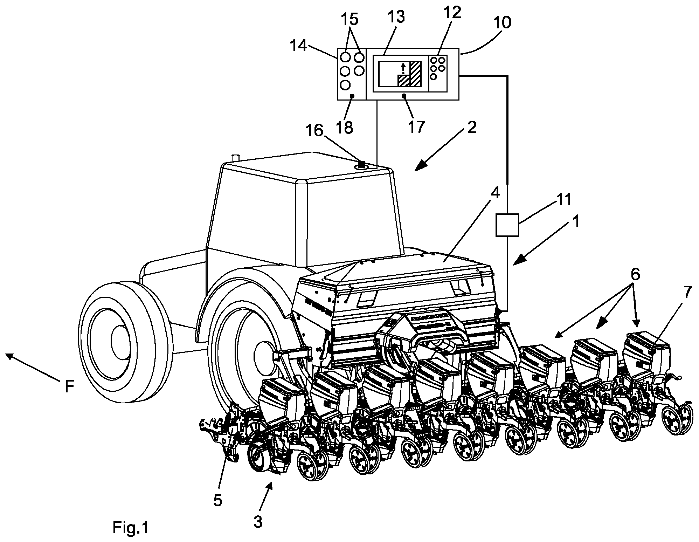

Ein landwirtschaftliches Maschinensystem mit einem erfindungsgemäßen Terminal ist in Fig. 1 dargestellt. Diese zeigt beispielhaft eine Einzelkornsämaschine 1 als landtechnische Maschine, welche an einen Schlepper 2 angebaut ist und in Fahrtrichtung F über eine landwirtschaftliche Fläche bewegt wird. Die Einzelkornsämaschine 1 verfügt über einen Düngertank 4 sowie mehrere nebeneinander angeordnete Einzelkornsäaggregate 6, die über einen Rahmen an der Einzelkornsämaschine befestigt sind. Die Einzelkornsäaggregate 6 verfügen jeweils über einen Vorratsbehälter 7, in dem das auszubringende Saatgut bevorratet wird. Das Saatgut wird beispielsweise mittels pneumatischer Vereinzelung im Bereich oberhalb der Scharanordnung 3 vereinzelt. Das Einbringen des Saatgutes erfolgt jeweils pro Säaggregat 6 mittels Scharanordnungen 3 in an sich bekannter Weise.

Der Dünger aus dem Tank 4 wird volumetrisch dosiert und über nicht dargestellte Leitungen pneumatisch zu Scharanordnungen 5 befördert, wo der Dünger ebenfalls in an sich bekannter Weise in den Boden appliziert wird. Die Dosierung des Düngers erfolgt typischerweise im unteren Bereich des Tanks mittels eines nicht dargestellten Dosierrades oder Dosierwelle oder Dosierschiebers. Die Drehzahl des Dosierrades bzw. der Dosierwelle und/oder die Schieberstellung des Dosierschiebers legt hierbei die Dosiermenge fest. Diese wird jeweils über einen Aktor 8 zum Antrieb des Dosierrades oder der Dosierwelle bzw. des Dosierschiebers eingestellt.

Dargestellt ist in schematischer Weise ebenfalls ein Terminal 10, welches üblicherweise in der Kabine des Schleppers 2 angeordnet ist und dem Benutzer der landtechnischen Maschine Informationen zum Arbeitsprozess darstellt und mittels verschiedener Bedienelemente eine Steuerung des Arbeitsprozesses ermöglicht. Zu diesem Zweck werden Informationen der landtechnischen Maschine von einem Jobrechner 11 an das Terminal zur Anzeige übermittelt. Umgekehrt werden geänderte Steuer- und/oder Regelparameter von dem Terminal 10 an den Jobrechner 11 gesendet, so dass entsprechend eine Änderung des Arbeitsprozesses durch den Jobrechner 11 eingeleitet werden kann. Die Anpassung derartiger Parameter kann an dem Terminal 10 mittels virtueller Bedienelemente, dargestellt auf einem berührungsempfindlichen Bildschirm 13 durch den Benutzer vorgenommen werden. Zusätzlich können in einem Tastenfeld 14, welches beispielsweise neben dem Bildschirm 13 angeordnet ist, physikalische Tasten 15 vorgesehen sein, mittels derer sich ebenfalls Steuer- und/oder Regelparameter der landtechnischen Maschine 1 anpassen lassen. In einem Bereich des Bildschirms 13 werden zudem Informationen des Arbeitsprozesses dargestellt, wie beispielsweise die derzeitge Position auf der landwirtschaftlichen Fläche, die Fahrtrichtung, die Geschwindigkeit, bearbeitete und unbearbeitete Bereiche sowie weitere Informationen. Zur Bereitstellung dieser Informationen ist vorzugsweise vorgesehen, dass das Terminal 10 zusätzlich mit einem Jobrechner des Schleppers und/oder Sensoren des Schleppers, wie einem GPS-Sensor zur Erfassung der derzeitigen Position und/oder Geschwindigkeit des Maschinensystems, verbunden ist.

Erfindungsgemäß ist nun vorgesehen, dass ein Sensor 17 an dem Terminal angeordnet ist, welcher sich dem Terminal 10 nähernde Objekte, insbesondere Hände und Finger detektiert. Somit können die Bedienelemente 12 durch das Terminal erst eingeblendet werden, wenn eine Bedienungsabsicht durch eine sich nähernde Hand oder Finger konkret erfasst wird. Ansonsten ist vorgesehen, dass die Bedienelemente ausgeblendet oder verkleinert dargestellt werden. Hierdurch vergrößert sich der Bereich des Bildschirms 13 in dem Informationen dargestellt werden können, sofern keine Bedienungsabsicht erkannt wurde. Außerdem können die Bedienelemente 12 größer eingeblendet werden, wenn eine Bedienungsabsicht erkannt wurde, als bei einer permanenten Darstellung der Bedienelemente, da nämlich nur kurzzeitig, nämlich für den Zeitraum der Bedienung und einen festgelegten Zeitraum darüber hinaus ein vergrößerter Teil des Bildschirmraumes durch die Bedienelemente 12 eingenommen wird. Dies verbessert die Bedienbarkeit der Bedienelemente 12 erheblich. Bei permanenter Darstellung der Bedienelemente, wie aus dem Stand der Technik bekannt, muss ein Kompromiss zwischen der Bedienbarkeit der Bedienelemente bei der erschütterungsreichen Fahrt über die landwirtschaftliche Fläche und dem für die Darstellung für Informationen zur Verfügung stehenden Raum eingegangen werden.

Der Sensor 17 für die Erfassung von sich nähernden Objekten, wie Händen oder Fingern, kann beispielsweise als optischer Sensor ausgeführt sein und sich vorzugsweise in der Nähe des Bildschirms 13, insbesondere mittig darüber oder darunter, befinden. Zusätzlich kann vorgesehen sein, einen zweiten Sensor 18 zur Erfassung von sich nähernden Fingern oder Händen im Bereich des Tastenfeldes 14 anzuordnen, insbesondere, wenn der Winkelbereich des Messfeldes des Sensors 17 zu klein ist und entsprechend sich dem Tastenfeld 14 nähernde Hände oder Finger nicht zuverlässig erfasst werden. Bei sich dem Tastenfeld nähernden Händen oder Fingern ist ebenfalls vorgesehen die Bedienelemente 12 einzublenden oder zu vergrößern, insbesondere, wenn durch die Tasten 14 dieselben Funktionen bedient werden wie durch die virtuellen Bedienelemente 12. Es kann zudem vorgesehen sein, bei einer Erfassung von Fingern oder Händen durch den Sensor 18 die Bedienelemente 12 auf eine andere Art einzublenden oder zu vergrößern, beispielsweise eine geringere Vergrößerung zu wählen, als bei einer Erfassung durch den Sensor 17 bzw. durch diesen allein, da in diesem Fall die Bedienelemente nicht mit einem Finger getroffen werden müssen, da offensichtlich das Tastenfeld 14 für die Bedienung vorgesehen ist. Dies gilt insbesondere dann, wenn bei der Bedienung mit den Bedienelementen 12 und den Tasten 14 dieselben Funktionen angesteuert werden können. Die Bedienelemente werden folglich nur eingeblendet, um dem Benutzer die Möglichkeit zu geben zu erkennen, welche Funktion sich hinter der jeweiligen Taste 14 in der entsprechenden Ansicht des Terminals 10 verbirgt. Mit anderen Worten dient das Einblenden der Bedienelemente 12 in diesem Fall nur der Visualisierung der sich jeweils hinter den Tasten 15 verbergenden Information, wenn diese nicht im Bereich des Tastenfeldes 14 selbst angezeigt wird. Auf diese Weise muss ein geringerer Anteil des darstellbaren Bereichs des Bildschirmes 13 mit Bedienelementen 12 blockiert werden.

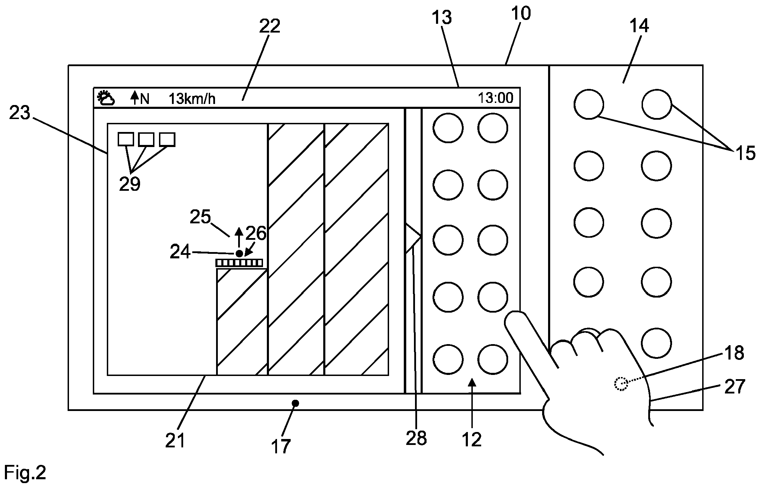

In Fig. 2 dargestellt ist ein Terminal 10 mit einem Bildschirm 13. Mehrere virtuelle Bedienelemente 12 sind auf dem Bildschirm 13 dargestellt. Der übrige Bereich des Bildschirms 13 wird im vorliegenden Ausführungsbeispiel durch die Kartenansicht 21 sowie eine Statusleiste 22 ausgefüllt. Die Kartenansicht 21 zeigt schematisch eine landwirtschaftliche Fläche, welche in einen unbearbeiteten und einen schraffierten, bearbeiteten Bereich unterteilt ist. Die Position 24 und Fahrtrichtung 25 der landtechnischen Maschine wird angezeigt. Zusätzlich sind mehrere Teilbreiten 26 verteilt über die Arbeitsbreite der Maschine zu erkennen. Es kann vorgesehen sein, dass der Betriebszustand der jeweiligen Teilbreite ebenfalls aus der Darstellung abgelesen werden kann. Eine Statusleiste 22 kann vorgesehen sein, um allgemeine Informationen, betreffend das Wetter, die Temperatur, die Himmelsrichtung, die Uhrzeit, die Geschwindigkeit und weitere anzuzeigen. Es kann vorgesehen sein, weitere Informationen, beispielsweise im unteren Bereich des Bildschirmes, anzuzeigen. Hierbei kann es sich beispielsweise um besonders wichtige Informationen betreffend den Status der landtechnischen Maschine handeln, beispielsweise die derzeit eingestellte Ausbringmenge einer landwirtschaftlichen Verteilmaschine und/oder den Restinhalt eines Tanks. Offensichtlich ist es vorteilhaft eine große Anzahl von Informationen so übersichtlich wie möglich auf dem Bildschirm 13 abzubilden.

Zu diesem Zweck werden insbesondere die Bedienelemente 13 eingeblendet oder vergrößert, sobald mittels eines Sensors 17 eine sich nähernde Hand 27 detektiert wird. Es kann auch im Bereich eines Tastenfeldes 14 ein zweiter Sensor 18 zur Detektion von sich im Bereich des Tastenfeldes nähernden Fingern und/oder Händen detektiert werden, welcher sich in der Fig. 1 im Gehäuse des Terminals, hinter der Hand 27 befindet und aus diesem Grund gestrichelt dargestellt ist. Ferner kann vorgesehen sein, dass die physikalischen Bedienelemente 15 und die virtuellen Bedienelemente 12 dieselben Funktionalitäten bedienen, so dass es vorgesehen sein kann bei einer Näherung von Fingern im Bereich des Tastenfeldes 14, detektiert durch den Sensor 18, die Bedienelemente gänzlich auszublenden verglichen mit einem Zustand bei dem die Bedienelemente 12 direkt durch Berührung der berührungsempfindlichen Bildschirm 13 mit einem Finger der Hand 27 betätigt werden. Im Falle der Bedienung der Tasten 15 ist ein Einblenden bzw. Vergrößern der Bedienelemente 12 vorgesehen, um dem Benutzer die Funktionalität der jeweiligen Taste 15 anzuzeigen. Für den Fall, dass die Bedienelemente 12 direkt betätigt werden sollen, ist eine stärkere Vergrößerung wünschenswert, um die Bedienung des jeweiligen Bedienelementes 12 bei der erschütterungsreichen Feldarbeit zu erleichtern. Es kann auch vorgesehen sein, bei sich näherndem Finger Bedienelemente 29 einzublenden, die beispielsweise die Kartenansicht betreffen, wobei die Funktion der Bedienelemente 29 nicht auch durch die Bedienelemente 15 aufgerufen werden kann.

Es kann vorgesehen sein, dass die Darstellung der Bedienelemente 12 von dem derzeitigen Arbeitsmodus der landtechnischen Maschine abhängt. Dieser kann durch Sensorsignale, wie Geschwindigkeit, Position der landtechnischen Maschine und/oder dem Betriebszustand von Aktoren an der landtechnischen Maschine, wie Klappzustand des Gestänges eine Feldspritze, erfasst werden. Verschiedene Bedienelemente, wie beispielsweise die Teilbreitenschaltung einer Verteilmaschine sind im Straßenmodus beispielsweise unnötig, so dass der entsprechende Platz auf dem Bildschirm für die Darstellung von zusätzlichen Informationen oder alternativer Bedienelemente verwendet werden kann.

Zudem kann vorgesehen sein, dass die Größe der Bedienelemente 12 von weiteren Faktoren abhängt, beispielsweise von der momentanen Geschwindigkeit und/oder dem Betriebsmodus der landtechnischen Maschine. Im Arbeitsmodus auf dem Feld und bei entsprechend hoher Geschwindigkeit ist die Bedienung der Bedienelemente erschwert und zudem aufgrund der größeren während der gleichen Zeitspanne zurückgelegten Wegstrecke zeitkritischer als bei einer vergleichsweise niedrigen Geschwindigkeit bei der Feldarbeit.

Es kann zudem ein Bedienelement 28 vorgesehen sein, mittels welchem die Bedienelemente 12 zur Seite manuell ausgeblendet werden können.

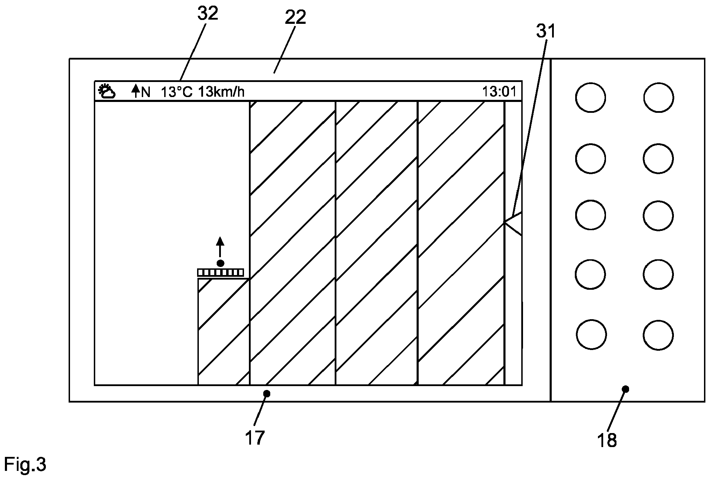

Wird durch den Sensor 17 und 18 keine Hand oder Finger erfasst, so werden die Bedienelemente wie in Fig. 3 dargestellt beispielsweise nach rechts ausgeblendet. Das Ausblenden kann beispielsweise nach zuvor erfolgtem Einblenden nach einer im Terminal hinterlegten und durch den Nutzer änderbaren Zeitspanne erfolgen. Ausgeblendete Bedienelemente 12 können beispielsweise durch ein Symbol 31 angedeutet sein, welches ebenfalls als Bedienelement zum manuellen Einblenden der Bedienelemente 12 dienen kann, beispielsweise wenn der Sensor 17 und/oder 18 eine Fehlfunktion aufweist.

In dem Bildschirmbereich können wegen der ausgeblendeten Symbole mehr Informationen dargestellt werden, beispielsweise ein größerer Ausschnitt einer Kartenansicht oder auch zusätzliche, vorher nicht dargestellte Informationen wie die Temperatur 32 in der Statusleiste 22. Das erfindungsgemäße Terminal erlaubt somit eine effizientere Darstellung relevanter Informationen durch das Ausblenden von nicht benötigten Bedienelementen 12. Alternativ können diese auch lediglich verkleinert dargestellt werden, wenn eine Abwesenheit einer Hand oder Fingern durch den Sensor 17 und/oder 18 detektiert wird. Ein Ausblenden von Bedienelementen ist ebenfalls vorteilhaft anwendbar auf weitere mögliche Terminalansichten, wie eine Konfigurationsansicht des Terminals oder eine Maschinenansicht in der Einstellungen und Parameter der landtechnischen Maschine 1 und/oder des Schleppers 2 überwacht und angepasst werden können.

## Patentansprüche

1. Landwirtschaftliches Terminal (10) zur Steuerung einer landtechnischen Maschine (1), wobei das Terminal über einen berührungsempfindlichen Bildschirm (13) verfügt,
**dadurch gekennzeichnet, dass**
das Terminal (10) über zumindest einen Näherungssensor (17, 18) zur Erfassung von sich nähernden Objekten (27) verfügt und dass das Terminal (10) konfiguriert ist, bei sich nähernden Objekten, insbesondere einer Hand oder Fingern, Bedienelemente (12) zur Einstellung von Einstellparametern, insbesondere einer Anpassung der Ausbringmenge oder einem Schalten von Teilbreiten, der landtechnischen Maschine (1) einzublenden oder vergrößert darzustellen.

2. Landwirtschaftliches Terminal nach Anspruch 1, **dadurch gekennzeichnet, dass** der Betriebszustand der landtechnischen Maschine (1) durch das Terminal (10) und/oder einen Jobrechner (11) an der landtechnischen Maschine (1) erfasst und an das Terminal (10) übermittelt wird und dass das Terminal (10) Bedienelemente (12) in Abhängigkeit des derzeitigen Betriebszustandes, insbesondere Arbeitsfahrt oder Straßenfahrt, der landtechnischen Maschine (1) darstellt.

3. Landwirtschaftliches Terminal nach zumindest einem der Ansprüche 1 - 2,
**dadurch gekennzeichnet, dass** ein Wegbewegen der Objekte (27) durch das Terminal (10) erfasst wird und das Terminal nach einer in diesem hinterlegten Zeitspanne die Bedienelemente (12) ausblendet oder verkleinert darstellt, sofern während der Zeitspanne nicht erneut sich nähernde Objekte (27) durch den Näherungssensor erfasst werden.

4. Landwirtschaftliches Terminal nach zumindest einem der Ansprüche 1 - 3,
**dadurch gekennzeichnet, dass** der Näherungssensor als kapazitiver und/oder optischer Sensor (17, 18) und/oder Ultraschallsensor und/oder Time-of-Flight-Kamera und/oder Laserscanner ausgebildet ist.

## Claims

1. Agricultural terminal (10) for controlling an agricultural machine (1), the terminal having a touch-sensitive screen (13),
**characterized in that**
the terminal (10) has at least one proximity sensor (17, 18) for sensing approaching objects (27), and **in that** the terminal (10) is configured to respond to approaching objects, in particular a hand or fingers, by displaying or showing in greater size operating elements (12) for setting setting parameters, in particular an adaptation of the application rate or a switching of partial widths, of the agricultural machine (1).

2. Agricultural terminal according to Claim 1,
**characterized in that** the operating state of the agricultural machine (1) is sensed by the terminal (10) and/or a job computer (11) on the agricultural machine (1) and is transmitted to the terminal (10) and **in that** the terminal (10) displays operating elements (12) in dependence on the current operating state, in particular working travel or road travel, of the agricultural machine (1).

3. Agricultural terminal according to at least one of Claims 1-2, **characterized in that** the moving away of the objects (27) is sensed by the terminal (10) and, after a time period stored in it, the terminal no longer displays the operating elements (12) or shows them in smaller size, as long as during the time period approaching objects (27) are not once again sensed by the proximity sensor.

4. Agricultural terminal according to at least one of Claims 1-3, **characterized in that** the proximity sensor is designed as a capacitive and/or optical sensor (17, 18) and/or ultrasonic sensor and/or time-of-flight camera and/or laser scanner.

## Revendications

1. Terminal agricole (10) destiné à commander une machine (1) de technique agricole, le terminal disposant d'un écran tactile (13),
**caractérisé en ce que**
le terminal (10) dispose d'au moins un détecteur d'approche (17, 18) destiné à détecter des objets (27) qui se rapprochent et **en ce que** le terminal (10) est configuré pour, en présence d'objets qui se rapprochent, notamment une main ou des doigts, afficher en incrustation ou représenter grossis des éléments d'opération (12) servant à régler des paramètres de réglage, notamment une adaptation de la quantité d'épandage ou une commutation de largeurs partielles de la machine (1) de technique agricole.

2. Terminal agricole selon la revendication 1,
**caractérisé en ce que** l'état opérationnel de la machine (1) de technique agricole est détecté par le terminal (10) et/ou par un ordinateur de tâches (11) sur la machine (1) de technique agricole et communiqué au terminal (10) et **en ce que** le terminal (10) représente les éléments d'opération (12) en fonction de l'état opérationnel actuel, notamment un déplacement de travail ou un déplacement routier, de la machine (1) de technique agricole.

3. Terminal agricole selon au moins l'une des revendications 1 et 2, **caractérisé en ce qu'**un mouvement d'éloignement des objets (27) est détecté par le terminal (10) et le terminal, après un intervalle de temps enregistré dans celui-ci, masque ou représente en taille réduite les éléments d'opération (12), sous réserve que des objets (27) qui se rapprochent n'aient pas de nouveau été détectés par le détecteur d'approche pendant l'intervalle de temps.

4. Terminal agricole selon au moins l'une des revendications 1 à 3, **caractérisé en ce que** le détecteur d'approche est réalisé sous la forme d'un détecteur (17, 18) capacitif et/ou optique et/ou d'un détecteur à ultrasons et/ou d'une caméra à temps de vol et/ou d'un dispositif de balayage à laser.
